# EUROPEAN PATENT SPECIFICATION

(11) **EP 2 441 509 B1**
(45) Date of publication and mention of the grant of the patent: **21.09.2016**
(21) Application number: 11478001.8
(22) Date of filing: 21.02.2011
(51) Int. Cl.: B01D 53/84, B01D 53/85

(54) **Plate type biofilter with a capillary system for charge humidification**
Biofilter vom Plattentyp mit einem Kapillarsystem zur Ladungsbefeuchtung
Biofiltre de type plaque avec système capillaire pour l'humidification de charge

(30) Priority: 13.10.2010 LT 2010085
(43) Date of publication of application: 18.04.2012
(73) Proprietor: Vilniaus Gedimino technikos universitetas, 10223 Vilnius (LT)
(72) Inventor: Baltrenas, Pranas A.J., 07143 Vilnius (LT); Zagorskis, Alvydas, 07102 Vilnius (LT)
(74) Representative: Pranevicius, Gediminas

(56) References cited:
- EP-A1- 0 978 558
- WO-A1-2008/025365
- WO-A1-2009/095035
- DE-A1-102007 027 021

## Description

### TECHNICAL FIELD

The present invention relates to biofilters with biologically activated material.

### BACKGROUND ART

The biofilter is used to clean the air from volatile organic compounds such as acetone, xylene, toluene, butanol, styrene, butyl acetate, and others. For that purpose biofilters may be used at chemical, food and furniture industry, wastewater treatment, waste handling, wood processing and oil refinement enterprises, printing-houses and in other industries which give rise to emissions of volatile organic solvents. Biofilters can also be applied at those enterprises which use various diluents and solvents for cleaning parts and equipment. The distinguishing feature of biofilters is that these treatment devices not only clean the air off volatile organic compounds but also neutralise unpleasant odours. For this purpose biofilters can also be used in agriculture (slaughterhouses, farms) and landfills which release ammonia and hydrogen sulphide into the atmosphere.

Biofilter-aided air treatment is a more cost-effective and environment friendly technique for reducing gaseous pollutant emissions in the air. The main shortcomings of the currently used biofilters are high aerodynamic resistance of a filtering section, complicated maintenance of humidity and operating temperature within the filtering section, likely obstruction of a mass of microorganisms in the biocharge or biomass leaching out of the filtering section, big space required for biofilters and large amounts of electric power necessary for humidification of the filtering section.

A prototype for the given invention is a biofilter for cleaning the air from gaseous pollutants (WO patent application No. 2008/025365 A1) which is designed for cleaning the air from volatile organic compounds and other gaseous pollutants such as ammonia and hydrogen sulphide. The biofilter's main element is a filtering section which consists of hollow tubes of different shapes arranged vertically. The tubes can be made either of natural or artificial (synthetic) materials. Material of natural origin may be composed of wood chips, barks. The artificial one may be composed of glass granules, polyurethane balls or polyvinylchloride rings. The tubes are humidified with water saturated with biogenic elements. The solution is sprayed with sprayers fitted above the **filtering section** composed of tubes. Depending of the nature of the pollutant being treated and the type of a **filtering section** a tube length may vary from 1 to 5 m. The biofilter's effectiveness in cleaning the air off volatile organic compounds reaches around 93%, and in neutralising odours - 64%. The resistance of biofilter's one rectangular-shaped (0.07×0.016 m) tube, 1.50 m high, reaches 35 Pa. The major advantage offered by the biofilter is that the device can hold fairly large concentrations of volatile organic compounds and has low aerodynamic resistance. Shortcomings of the device: the device has no air heating system to accelerate the propagation of microorganisms, the costs of electricity necessar for humidification **of the filtering section** are high, a **filtering section** of the natural origin is not highly durable, whereas an artificial **filtering section** requires continuous activation with microorganisms.

The second prototype for the invention in question is a biofilter intended for cleaning the air off gaseous pollutants (patent application No. DE 101 32224 A1) such as ethanol, acetic acid, methane, ammonia or oxides of nitrogen. Airflow polluted with gaseous pollutants flows through a biofilter's **filtering section** composed of polyvinylchloride plates arranged next to each other. The surface of these plates consists of porous glass fibre. Microorganisms are sprayed over the **filtering section** with sprayers fitted above the **filtering section.** The biofilter reduces the concentration of acetic acid from 300 to 30 ppm, methane from 60 to 50 ppm, ammonia from 60 to 5 ppm. The main advantage of the biofilter is that it uses a **filtering section** of the plate type structure. The surface of these plates consists of porous glass fibre whose porosity can reach up to 70 %. Shortcomings of the device: since spontaneous microorganisms do not propagate in the **filtering section** of this type it requires continuous activation with microorganisms, the **filtering section** is humidified and activated with sprayers fitted above it, which increases energy costs for biofilter operation as we all as a risk of failure or safety of humidification elements.

The international patent application WO2009/095035 on which the preamble of claim 1 is based, discloses a plate type biofilter having a polluted air supply duct, a filtering section, a humidification system, a ventilator and temperature maintaining system. The disadvantage of the mentioned biofilter is in that the filtering section of the biofilter is being humidified actively by periodically spraying the activated liquid using a humidifying system arranged above the filtering section thus requiring an additional energy input to perform the humidification.

### SUMMARY OF INVENTION

The purpose of the present invention is to improve the structure and humidification of the **filtering section** of a **biofilter,** extend the operating duration of the biologically activated carrier material being used, enhance the effectiveness of air treatment and reduce **the** filter's aerodynamic resistance and cost.

The operation principle of the biofilter is based on the decomposition of gaseous pollutants by using certain cultures of microorganisms. The method of biological air treatment employs less expensive, more effective, waste-free and environment friendly biotechnologies which allow more effective cleaning of the air from volatile organic compounds and neutralisation of unpleasant odours.

The main element of the plate type biofilter with a capillary humidification system is a **filtering section.** The **filtering section** consists of polymer plates arranged vertically next to each other which produce a capillary effect of humidification. Due to milligaps among the plates arranged next to each other the plate type structure of a charge filtering section reduces device's aerodynamic resistance. As determined by investigations, the aerodynamic resistance of the biofilter with the aforementioned system of plate arrangement reaches around 35 Pa and, therefore, fairly long plates can be applied, which enhances the effectiveness of air treatment.

Lightly pressed boards of thermally processed wood fibre are fixed from both sides of the plates. Durability of the wood fibre is achieved through thermal processing of wood waste in a steam explosion reactor (at 32 bar pressure and 235°C temperature). Thus, the molecular structure of the wood is changed preventing wood fibre from rot in a humid medium, which extends the durability of the biofilter's plates. For microorganisms to be able to propagate in porous boards these boards should be lightly pressed.

**Table 1. Comparison of research results concerning the main indicators of a plate structure filtering section with a capillary humidification system and other filtering sections**

| Airflow rate, m/s | Vertically arranged boards of thermally processed wood fibre | Cassette biofilters (sections are located one above the other) | | | |
|---|---|---|---|---|---|
| | | Wood chip and bark mixture | Wood chip, bark and zeolite grain mixture (ratio 1:1 according to volume) | Wood chip, bark and foam cube mixture (ratio 1:1:1 according to volume) | Wood chip, bark, zeolite grain and foam cube mixture (ratio 1:1:1:1 according to volume) |
| Aerodynamic resistance, Pa | | | | | |
| 0.1 | 35 | 255 | 315 | 231 | 285 |
| 0.2 | 42 | 278 | 410 | 275 | 330 |
| 0.3 | 55 | 305 | 520 | 282 | 382 |
| Air treatment effectiveness, % | | | | | |
| 0.1 | 75 | 42 | 51 | 46 | 55 |
| 0.2 | 60 | 36 | 42 | 40 | 47 |
| 0.3 | 43 | 30 | 35 | 32 | 38 |

Table 1 presents a comparison between research data obtained from the investigations of a **filtering section** having a plate structure which comprises plates, 0.2 m long, arranged in milligaps among them and data received from the investigations of cassette biofilters with its **filtering section** of 0.2 m thick. For the purpose of comparison, investigations were carried out with cassette biofilters using wood chip, bark, zeolite grain and foam cube mixtures by maintaining identical research conditions (amount of biogenic elements and temperature) and humidifying a charge with activated water droplets sprayed over it from above. As the performed investigations showed, a charge **filtering section** composed of plates has much lower aerodynamic resistance and, thanks to a capillary humidification system, higher air treatment effectiveness. In order to achieve 95% air treatment effectiveness of the plate biofilter, the length of its plates should reach 0.8 m. In the case of cassette biofilters, 95% air treatment effectiveness is achieved upon installing 5-6 cassettes filled with a filtering charge whose total height reaches 0.8 - 1.0 m. However, at the presence of such a charge layer the aerodynamic resistance of cassette biofilters is up to 1200 Pa. In the meantime the increase of the length of the plates of a plate biofilter with a capillary system of humidification from 0.2 m (at the presence of which biofilter's aerodynamic resistance reaches around 35 Pa) to 0.8 m would only insignificantly increase **the** device's aerodynamic resistance to 60 Pa.

A **filtering section** in the plate biofilter is activated by humidifying it with a solution saturated with biogenic elements. During the process of air treatment molecules of the supplied pollutant are slowly moving through wood fibre boards. After being transferred from the gaseous to the liquid phase pollutants are decomposed by microorganisms as a result of fermentation processes occurring in a biofilm which has formed on the boards.

The effectiveness of biological air treatment largely depends on humidification systems installed in biofilters. The optimum humidity of a charge is 60-80 %. A charge in the currently applied biofilters is humidified with humidification sprayers located above it to which water is supplied by a pump from a water tank. Application of such a humidification system results in large electric power consumption, emergence of anaerobic areas inside a filtering layer and likely biomass leaching out of the charge, which reduces biofilters' air treatment effectiveness. If power supply is interrupted or a technological process is stopped a charge is not humidified and therefore it can become too dry and crack.

As known from the laws of physics, when a liquid interacts with the walls of a solid body, the forces of surface stress try to raise the level of the liquid. The column pressure of the liquid which ascends by the walls of a solid body is set off by the pressure directed upwards which is created by curved surface stress. Thus, under the impact of the forces of surface stress, liquid is flowing within capillaries. In physics such a phenomenon is known as capillarity and can be applied in an air treatment biofilter for the humidification of a filtering section.

In order to achieve the capillary effect of humidification, the biofilter's filtering section is composed of polymer plates vertically arranged next to each other, the bottom part of which, 1/3 of the height, is submersed in activated solution. It has been determined experimentally that upon submersing such part of the plate in salts solution, the liquid rises up to the top of the plate, thus humidifying the entire plate. The salt solution is composed of: K₂HPO₄ - 1 g, KCl - 0.5 g, MgSO₄·7H₂O - 0.5 g, FeSO₄·7H₂O - 0.1 g, NaNO₃ - 0.90 g, diluted water - 1000 g. As plate's height is many times above its width and there are milligaps between wood fibre boards arranged vertically next to each other, due to the forces of surface stress in plate capillaries, solution rises via pores upward thus humidifying the filtering section.

As a result of the effect of capillary humidification of the filtering section humidity spontaneously rises upward thus humidifying the plates and this system of self-humidification, therefore, does not consume additional energy, while the filtering section is humidified well when a technological process is interrupted, during repair work or when power supply is discontinued for some other reasons. Such a humidification system ensures avoidance of insufficient humidification, over-drying or cracking of the filtering section, which facilitates air flowing capacity and increases the activity of microorganisms. As the capillary humidification of a filtering section does not require any electrical elements such as a water pump or a time relay, the biofilter is safer and simpler to operate. The use of the capillary system for humidification of a filtering section in a biofilter ensures avoidance of excessive humidity of the filtering section as well as the absence of anaerobic areas inside the filtering layer which increase aerodynamic resistance of the filtering section, reduce the interaction duration of pollutants and microorganisms and at the same time the treatment effectiveness of the device. In cassette biofilters the biggest load falls on the first layer of a filtering section, which increases the aerodynamic resistance of this layer and the probability of biomass pollution, whereas in a plate type biofilter airflow uniformly distributes over the entire surface of plates. The capillary system of humidification allows avoidance of probable biomass leaching out of the filtering section.

The capillary system of humidification will allow reducing the device's operational costs as the filtering section will not require humidification by spraying water saturated with biogenic elements over it. The devices will gain more mobility. Due to high cost-effectiveness of the method the designed biofilters of low capacity can be very widely applied at small and medium-sized enterprises as their sources of pollution are not big but there are quite many of them.

### BRIEF DESCRIPTION OF DRAWINGS

Further the air treatment device of the present invention will be described in details with reference to the drawings, wherein:

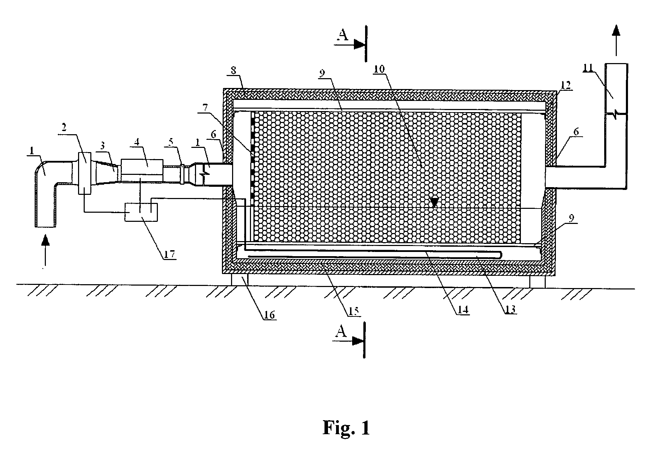

Fig. 1 is a diagrammatic view of a biofilter of the present invention in a longitudinal section;

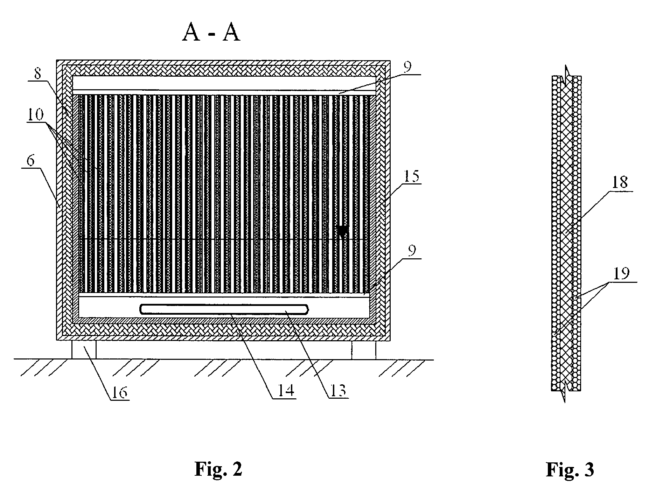

Fig. 2 is a view of the section of a biofilter via line A-A of Fig. 1; and
Fig. 3 is a cross-section view of one of plurality of polymer plates in a biofilter filtering section which are covered with thermally treated, porous and lightly pressed wooden fibre boards from both sides.

### DESCRIPTION OF THE PREFERRED EMBODIMENT

The air treatment device comprises an air duct of zinced tinplate 1, ventilator 2, connector 3, air heating element 4, valve 5, metal body 6, perforated plate 7, thermal insulation 8, sealing sheets (the top and the bottom) for vertical plates with guides 9, filtering section 10, cleaned air discharge duct 11, fastenings for sealing sheets 12, activated liquid 13, activated liquid heating elements 14, water tank 15, legs 16, control panel 17, polymer plates 18, thermally treated, porous and lightly pressed boards of wood fibre 19.

The ventilator 2 takes polluted airflow through the air duct 1 to the biofilter. In order to avoid large differences in temperature (a temperature shock) air is heated with the heating element 4 to 30°C before being supplied to the biofilter. The heating system is connected with the ventilator by the connector 3. Airflow supplied to the biofilter is regulated with the valve 5 fitted in the air duct 1. For the purpose of preventing heat losses, the biofilter's body 6 is insulated with a thermal insulation layer 8 of 5 cm thick which retains and reflects the heat. To achieve a uniform airflow distribution over the entire useful area of the biofilter the perforated plate 7 is arranged before the biofilter's filtering section 10.

The biofilter's filtering section 10 is the main element of the biofilter. The filtering section consists of the polymer plates 18 which are fixed on the guides of the top and bottom sheets 9 and on the external surface of which slightly pressed boards of thermally treated wood fibre 19 are applied. The bottom part of the plates is submersed in water saturated with biogenic elements. Water rises upwards by the plates and distributes over the entire area of the board 19. The water tank 15 in the bottom part of the biofilter is filled with salt solution containing biogenic elements (N, P, K) 13 which enhance the activity of the filtering section. In order to increase the activity of mesophilic microorganisms water is heated in the water tank 15 to 30°C with the installed activated liquid heating elements 14.

The sealing plates with guides for polymer plate fixing 9 are fastened to the body with the fastenings 12. The polluted air flowing between lightly pressed boards of wood fibre 19 is cleaned with microorganisms. Since there are milligaps between the boards 19 a good contact is present between polluted air flowing between the boards 19 and microorganisms on the surface of the lightly pressed wood fibre boards 19. The polluted air is discharged from the biofilter via the air duct 11. The legs 16 are fitted in the upper part of the biofilter's structure. The optimum operation regime of the ventilator 2 and heating elements 4 and 14 is ensured by the control panel 17.

## Claims

1. A plate type biofilter having a polluted air supply duct (1), a filtering section (10), a humidification system (13), a ventilator (2) which blows polluted air to the filtering section, systems for maintaining temperature in the biofilter, the filtering section (10) consisting of plurality of vertical polymer plates (18) arranged with milligaps between them in parallel to the movement direction of the polluted air, the milligaps being such to reduce aerodynamic resistance and allow contact between polluted air and microorganisms on the plates, **characterized in that** the plates are covered from both sides with porous boards (19), **in that** means are provided such that in use the bottom of the covered plates is submersed in activated liquid (13), thus causing capillary humidification of the filtering section (10), and **in that** the heating elements (14) are arranged under the filtering section (10) to maintain the temperature of the activated liquid (13) at 30°C.

2. The biofilter according to claim 1, **characterized in that** the vertical polymer plates (18) are covered from both sides with porous lightly pressed boards (19) made of thermally treated wood fibre.

3. The biofilter according to claim 1, **characterized in that** the vertical polymer plates (18) covered with porous boards (19) are submersed in activated liquid (13) up to 1/3 of their height.

## Patentansprüche

1. Biofilter vom Plattentyp mit einem Zufuhrkanal für verunreinigte Luft (1), einem Filterabschnitt (10), einem Befeuchtungssystem (13), einem Ventilator (2), der verunreinigte Luft in den Filterabschnitt bläst, Systemen zum Aufrechterhalten der Temperatur in dem Biofilter, wobei der Filterabschnitt (10) aus einer Mehrzahl von vertikalen Polymerplatten (18) besteht, die mit Kleinstspalten zueinander parallel zur Bewegungsrichtung der verunreinigten Luft angeordnet sind, wobei die Kleinstspalten derart sind, dass der aerodynamische Widerstand verringert und ein Kontakt zwischen der verschmutzten Luft und Mikroorganismen auf den Platten ermöglicht wird, **dadurch gekennzeichnet, dass** die Platten auf beiden Seiten mit porösen Scheiben (19) bedeckt sind, dass Mittel bereitgestellt werden, sodass der untere Teil der abgedeckten Platten während der Benutzung in eine aktivierte Flüssigkeit (13) eingetaucht ist, sodass eine kapillare Befeuchtung des Filterabschnitts (10) verursacht wird, und dass die Heizelemente (14) unter dem Filterabschnitt (10) angeordnet sind, sodass die Temperatur der aktivierten Flüssigkeit (13) bei 30 °C gehalten wird.

2. Biofilter nach Anspruch 1, **dadurch gekennzeichnet, dass** die vertikalen Polymerplatten (18) von beiden Seiten mit porösen, leicht gepressten Scheiben (19) aus wärmebehandelten Holzfasern bedeckt sind.

3. Biofilter nach Anspruch 1, **dadurch gekennzeichnet, dass** die vertikalen mit porösen Scheiben (19) bedeckten Polymerplatten (18) bis zu 1/3 ihrer Höhe in die aktivierte Flüssigkeit (13) eingetaucht sind.

## Revendications

1. Biofiltre de type plaque, comprenant un conduit d'alimentation en air pollué (1), une section de filtrage (10), une section d'humidification (13), un ventilateur (2) soufflant de l'air pollué vers la section de filtrage, des systèmes destinés à maintenir une température dans le biofiltre, la section de filtrage (10) comprenant une pluralité de plaques polymères verticales (18) disposées avec des milliespaces entre elles parallèlement à la direction de déplacement de l'air pollué, les milli-espaces étant conçus pour réduire la résistance aérodynamique et permettre un contact entre l'air pollué et des microorganismes sur les plaques, **caractérisé en ce que** les plaques sont recouvertes des deux côtés avec des panneaux poreux (19), **en ce qu'**il est prévu des moyens permettant d'immerger le fond des plaques recouvertes dans un liquide activé (13) pendant l'utilisation, provoquant ainsi une humidification capillaire de la section de filtrage (10), et **en ce que** les éléments de chauffage (14) sont disposés sous la section de filtrage (10) afin de maintenir la température du liquide activé (13) à 30 °C.

2. Biofiltre selon la revendication 1, **caractérisé en ce que** les plaques polymères verticales (18) sont recouvertes des deux côtés avec des panneaux poreux légèrement pressés (19) constitués de fibres de bois traitées thermiquement.

3. Biofiltre selon la revendication 1, **caractérisé en ce que** les plaques polymères verticales (18) recouvertes de panneaux poreux (19) sont immergées dans un liquide activé (13) jusqu'à 1/3 de leur hauteur.
